# EUROPÄISCHE PATENTSCHRIFT

(11) **EP 3 279 748 B1**
(45) Veröffentlichungstag und Bekanntmachung des Hinweises auf die Patenterteilung: **07.08.2019**
(21) Anmeldenummer: 17169479.7
(22) Anmeldetag: 04.05.2017
(51) Int. Cl.: G05B 19/00

(54) **VERFAHREN UND VORRICHTUNG ZUM STEUERN EINER FRÄSMASCHINE**
METHOD AND DEVICE FOR CONTROLLING A MILLER
PROCÉDÉ ET DISPOSITIF DE COMMANDE D'UNE FRAISEUSE

(30) Priorität: 02.08.2016 DE 102016214228
(43) Veröffentlichungstag der Anmeldung: 07.02.2018
(73) Patentinhaber: Dr. Johannes Heidenhain GmbH, 83301 Traunreut (DE)
(72) Erfinder: KOHLER, Frieder, 83362 Lauter (DE)

(56) Entgegenhaltungen:
- DE-A1- 10 139 638
- DE-A1-102010 019 419
- DE-A1-102011 089 014

## Beschreibung

### GEBIET DER TECHNIK

Die vorliegende Erfindung betrifft ein Verfahren und eine Vorrichtung zum Steuern einer Fräsmaschine. Mit diesem Verfahren wird eine Fräsbearbeitung überwacht, so dass beim Auftreten unerwünschter Zustände während der Bearbeitung eines Werkstücks Gegenmaßnahmen ergriffen werden können.

### STAND DER TECHNIK

Aus der US 5822212 ist ein System zur Überwachung einer Werkzeugmaschine bekannt. Dabei wird die Last einer Spindel überwacht, die ein Bearbeitungswerkzeug antreibt. Diese Last wird anhand des zeitlichen Verlaufs des Stromes ermittelt, mit dem die Spindel angetrieben wird. Zur Überwachung werden anhand von Testbearbeitungen zunächst Werte für die Spindellast ermittelt, die bei späteren Bearbeitungsvorgängen als Referenzwert dienen. Weicht bei diesen späteren Bearbeitungen die Spindellast um mehr als einen noch zulässigen Betrag vom Referenzwert ab, so wird ein Alarm erzeugt. Es kann dann beispielsweise eine Unterbrechung des Bearbeitungsvorganges ausgelöst werden. Solche übermäßigen Abweichungen können beispielsweise durch ein stumpfes oder gar ein gebrochenes Werkzeug entstehen, so dass so eine Überwachung größeren Schaden am Werkstück verhindern kann.

Es hat sich allerdings herausgestellt, dass solche Überwachungseinrichtungen oft auch dann auslösen, wenn dies eigentlich gar nicht nötig wäre. Dies tritt häufig bei der Bearbeitung von besonders harten Metallen auf, wie beispielsweise bei den unter dem Handelsnamen INCONEL bekannten Nickel-Chrom-Legierungen. Solche Legierungen lassen sich nur mit besonders niedrigen Drehzahlen des Werkzeugs zerspanen. Übliche Überwachungen auf einen unteren Grenzwert für die Drehzahl führen hier bei einer Überlast schnell zu einem Abschalten der Werkzeugmaschine. Andere zur Überwachung geeignete Parameter wie die Spindellast sind stark von der Zahneingriffsfrequenz des Werkzeugs überlagert, was ebenfalls zu unnötigen Abschaltungen führen kann.

Aus der DE 102013202408 A1 ist es bekannt, Ratterschwingungen bei der Fräsbearbeitung zu dämpfen, indem im Regelkreis der Antriebe einer Werkzeugmaschine ein Filter wirkt, dessen maximale Dämpfung bei einer Frequenz eingestellt wird, der die aktuelle Zahneingriffsfrequenz berücksichtigt. Für eine Überwachung der Fräsbearbeitung ist dieser Filter aber nicht geeignet.

Aus der DE 102010019419 A1 ist die Überwachung eines Bearbeitungsvorganges anhand eines Parameters bekannt, aus dem die Zahneingriffsfrequenz herausgefiltert wird. Aus der DE 10139638 A1 ist eine numerisch gesteuerte Werkzeugmaschine bekannt, deren Regelkreis einen Abtastratenwandler für Sollwerte enthält, wobei die Abtastrate von einer Interpolator-Abtastrate zu einer Regelkreis-Abtastrate gewandelt wird,

### ZUSAMMENFASSUNG DER ERFINDUNG

Es ist Aufgabe der Erfindung, ein Verfahren und eine Vorrichtung zur Überwachung einer Fräsbearbeitung anzugeben, mit dem ein unerwünschter Zustand der Werkzeugmaschine rechtzeitig erkannt werden kann. Diese Erkennung soll robust gegen Fehlauslösungen sein, so dass unnötige Unterbrechungen der Fräsbearbeitung möglichst nicht auftreten.

Diese Aufgabe wird gelöst durch ein Verfahren gemäß Anspruch 1. Vorteilhafte Details dieses Verfahrens ergeben sich auch aus den von Anspruch 1 abhängigen Ansprüchen. Eine entsprechende Vorrichtung zur Überwachung einer Fräsbearbeitung ist im unabhängigen Vorrichtungsanspruch 6 angegeben.

Es wird ein Verfahren zum Steuern einer Fräsmaschine offenbart, mit dem anhand eines zeitlich variablen Parameters einer Numerischen Steuerung eine Fräsbearbeitung überwacht wird, indem der Parameter auf das Über- oder Unterschreiten eines Grenzwertes während der Fräsbearbeitung überwacht wird. Das Verfahren zeichnet sich dadurch aus, dass im zeitlichen Verlauf des Parameters die Zahneingriffsfrequenz eines rotierenden Fräswerkzeugs herausgefiltert wird.

Auf diese Weise kann eine wesentlich robustere Überwachung der Fräsbearbeitung erzielt werden, denn der Einfluss der dem überwachten Parameter deutlich überlagerten Zahneingriffsfrequenz wird erheblich vermindert, eine Fehlauslösung der Überwachung lediglich aufgrund des Zahneingriffs wird vermieden.

Um den zur Filterung der Zahneingriffsfrequenz nötigen schaltungstechnischen Aufwand bzw. die dafür nötige Rechenleistung möglichst gering zu halten, wird eine besondere Abfolge von Verarbeitungsschritten für den überwachten Parameter vorgeschlagen. So wird dieser zunächst mit fester Frequenz erfasste Parameter in einem Abtastratenwandler verarbeitet, der den Parameter in einem variablen Takt ausgibt. Dieser variable Takt entspricht einem Vielfachen der aktuellen Zahneingriffsfrequenz, wobei sich die zehnfache Zahneingriffsfrequenz besonders bewährt hat.

Dank dieser Abtastratenwandlung lässt sich anschließend ein besonders einfach aufgebauter gleitender Mittelwertfilter anwenden, um den überwachten Parameter weitgehend vom Einfluss des Zahneingriffs zu befreien. Die Ressourcen der Numerischen Steuerung werden so geschont, die zur Filterung der Zahneingriffsfrequenz benötigte Rechenleistung lässt sich klein halten.

Ein Parameter im Sinne dieser Anmeldung ist eine Zustandsgröße, ein Wert oder ein Signal, der den aktuellen Zustand des Systems aus Numerischer Steuerung und Fräsmaschine beschreibt. Dieser Parameter wird beispielsweise von einem Sensor gemessen oder von der Numerischen Steuerung aus gemessenen Werten abgeleitet, evtl. auch mit Bezug auf einen Sollwert. Auf Über- oder Unterschreiten eines Grenzwerts für so einen Parameter soll entsprechend reagiert werden.

Weitere Vorteile und Einzelheiten der vorliegenden Erfindung ergeben sich aus der nachfolgenden Beschreibung verschiedener Ausführungsformen anhand der Figuren.

### KURZE BESCHREIBUNG DER ZEICHNUNGEN

Dabei zeigt
- Figur 1: das Zusammenwirken von Abtastratenwandler und gleitendem Mittelwertfilter,
- Figur 2: ein Beispiel für einen Abtastratenwandler,
- Figur 3: ein Beispiel für einen gleitenden Mittelwertfilter,
- Figur 4: die Auswirkung der Filterung auf das Messsignal des Parameters.

### BESCHREIBUNG DER AUSFÜHRUNGSFORMEN

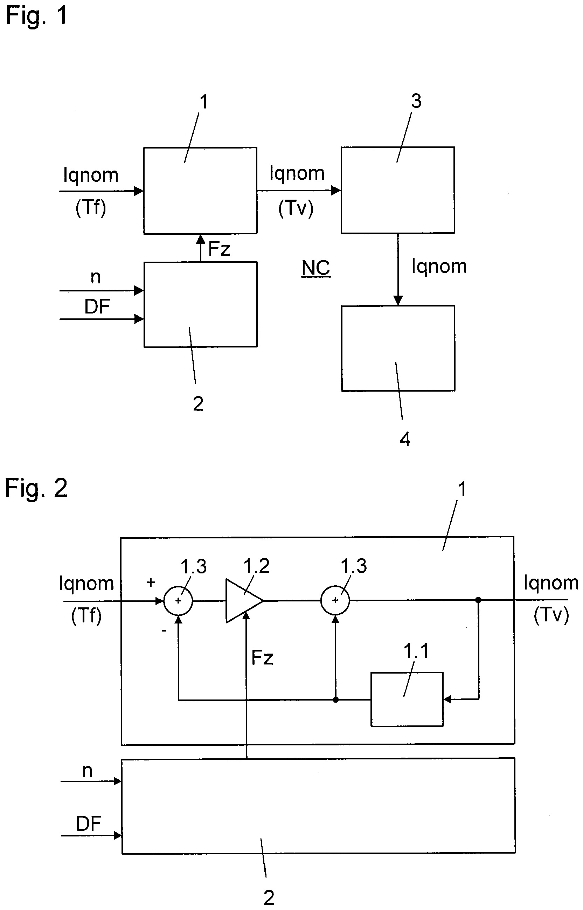

Die Figur 1 zeigt das Zusammenwirken eines Abtastratenwandlers 1 und eines gleitenden Mittelwertfilters 3, die z.B. als Softwaremodule in der Numerischen Steuerung NC einer Fräsmaschine realisiert sein können.

Die beispielsweise in einer Werkzeugtabelle innerhalb der Numerischen Steuerung NC hinterlegte Anzahl n von Schneiden eines Werkzeugs und die aktuelle Drehzahl DF der Spindel werden einer Recheneinheit 2 zugeführt. Durch Multiplikation der beiden Werte berechnet die Recheneinheit 2 die aktuelle Zahneingriffsfrequenz FZ und gibt diese an den Abtastratenwandler 1 ab.

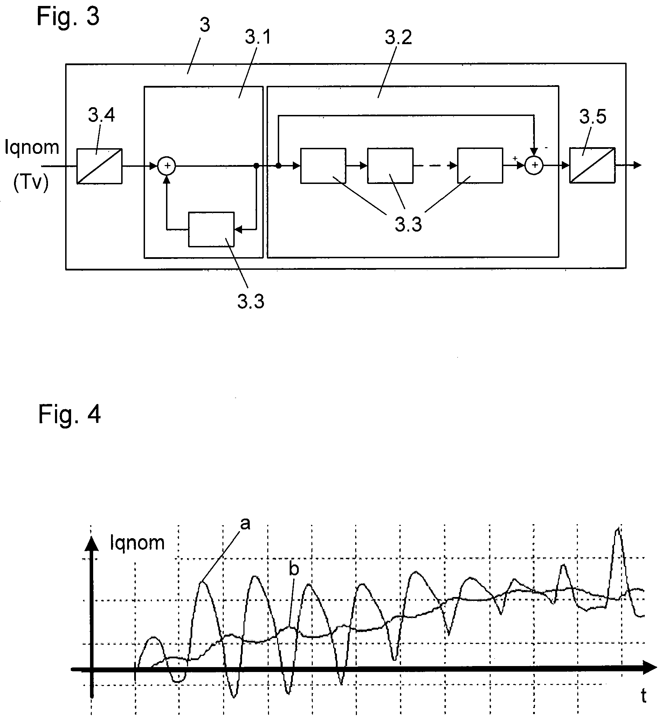

Diesem Abtastratenwandler 1 wird der Messwert des zur Überwachung herangezogenen Parameters Iqnom zugeführt, und zwar in einem festen Takt Tf. Im Beispiel wird als Parameter Iqnom der von der Numerischen Steuerung NC erregelte Sollstrom für den Antrieb der das Fräswerkzeug rotierenden Spindel herangezogen, der in gewissem Maße proportional zur aktuellen Spindellast ist. Der Sollstrom Iqnom entspricht idealerweise dem gemessenen Iststrom für den Spindelantrieb. Da jeder Zahneingriff des rotierenden Fräswerkzeugs in das Werkstück die Spindel abbremst, reagiert die Steuerung NC mit einem Anstieg des Sollstromes Iqnom, wie es gut im ungefilterten Signal a der Figur 4 zu erkennen ist.

Der Abtastratenwandler 1 gibt nun diesen Parameter Iqnom mit einem variablen Takt Tv ab. Dieser variable Takt Tv ist dabei so gewählt, dass er einem ganzzahligen Vielfachen der Zahneingriffsfrequenz FZ entspricht. Dabei hat sich in der praktischen Anwendung als variabler Takt Tv die zehnfache Zahneingriffsfrequenz FZ als guter Kompromiss zwischen geringem schaltungstechnischem Aufwand (bzw. Aufwand an Rechenleistung) und guter Dämpfung der Zahneingriffsfrequenz FZ im später resultierenden Signal bewährt. Ein Bereich vom Fünf- bis Zwanzigfachen der Zahneingriffsfrequenz FZ sollte ähnlich nützlich sein.

Der so abtastratengewandelte Parameter Iqnom wird an einen gleitenden Mittelwertfilter 3 abgegeben. Dieser mittelt eine gewisse Anzahl der zuletzt übermittelten Werte des Parameters Iqnom, und zwar eine Anzahl, die dem zuvor verwendeten Vielfachen der Zahneingriffsfrequenz FZ entspricht. Im Beispiel wird also über die letzten 10 Werte gemittelt, und der so gemittelte Parameter Iqnom an eine Überwachungseinheit 4 ausgegeben. Dass in diesem gemittelten Signal die Zahneingriffsfrequenz FZ deutlich gedämpft ist, lässt sich gut im Signal b der Figur 4 ablesen, vor allem im Vergleich mit dem ungefilterten Signal a.

Die Figur 2 erklärt ein mögliches Ausführungsbeispiel für einen Abtastratenwandler 1, die als solche auch als Dezimationsfilter oder Cascaded-Integrator-Comb-Filter bekannt und für die Zwecke dieser Erfindung ebenso geeignet sind wie andere Schaltungen, die ein Signal auf eine gewünschte Abtastrate wandeln können.

Der Abtastratenwandler 1 erreicht mittels eines Verzögerungsgliedes 1.1, eines linearen Verstärkers 1.2 und zweier Summationspunkte 1.3, dass am Ausgang des Abtastratenwandlers 1 der Parameter Iqnom mit einem variablen, dem zehnfachen der Zahneingriffsfrequenz ZF entsprechenden Takt Tv ausgegeben wird. Typische Werte sind dabei eine Zahneingriffsfrequenz von 60 Hz (bei n = 6 Zähnen und einer Spindeldrehzahl DF = 600 Umdrehungen pro Minute, entsprechend 10 Hz), woraus ein variabler Takt Tv von 600 Hz folgt.

Der feste Takt Tf, mit dem der Parameter Iqnom ursprünglich erfasst wird, liegt z.B. im Bereich von 3.3kHz bis 20 kHz, vorzugsweise bei 5 kHz.

Die Figur 3 erklärt ein Ausführungsbeispiel für einen gleitenden Mittelwertfilter 3, dem der Parameter Iqnom mit variablem Takt Tv zugeführt wird.

Um Fehler bei der nachfolgenden Berechnung zu vermeiden, rechnet die in der Figur 3 gezeigte Schaltung mit Integer-Werten. Daher wird der Parameter Iqnom zunächst in einem Wandler 3.4 von einer Float-Zahl in eine Integer-Zahl umgewandelt. Es folgt eine Integrationsstufe 3.1, die den Parameter Iqnom aufintegriert. Die dann folgende Differentiationsstufe 3.2 differenziert den so erhaltenen Wert wieder, wobei dies besonders einfach dadurch geschieht, dass die Werte durch ein Schieberegister mit Registerplätzen 3.3 geschoben werden, deren Anzahl gerade dem gewählten Vielfachen der Zahneingriffsfrequenz FZ entspricht. Im Beispiel werden also zehn Registerplätze 3.3 benötigt. Es genügt dann, die Differenz der Werte vor bzw. nach dem Schieberegister zu bilden und als gefilterten Parameter Iqnom auszugeben.

Zwischen den einzelnen Registerplätzen 3.3 liegt jeweils eine gewisse zeitliche Verzögerung, die bei einer konstanten Zahneingriffsfrequenz FZ konstant ist. Um auch bei einer beschleunigten Drehbewegung des Werkzeugs, also bei einer sich verändernden Zahneingriffsfrequenz FZ eine gute Filterwirkung zu erzielen, müssen die einzelnen Verzögerungszeiten unterschiedlich gewählt werden. Es sollte jederzeit gelten, dass die Summe aller Verzögerungszeiten der für eine Spindelumdrehung benötigten Zeit entspricht, geteilt durch die Anzahl n der Zähne des Werkzeugs.

Nach einer erneuten Umwandlung von einer Integer-Zahl in eine Float-Zahl in einem weiteren Wandler 3.5 kann der gefilterte Wert vom Parameter Iqnom an eine Überwachungseinheit 4 abgegeben werden, die eine Überwachung auf Über- oder Unterschreiten von Grenzwerten durchführt, und gegebenenfalls eine Abschaltreaktion ausführen oder eine Warnung abgeben kann.

Dank der in der Figur 4 durch Vergleich der Signale a und b gut zu erkennenden Filterung der Zahneingriffsfrequenz FZ im zeitlichen Verlauf des Parameters Iqnom ist mit dem gefilterten Signal b eine wesentlich weniger Störungsanfällige Überwachung des Bearbeitungsvorganges möglich. Das beschriebene Verfahren bzw. die beschriebene Vorrichtung eignen sich zur Überwachung von numerisch gesteuerten Werkzeugmaschinen, bei denen ein rotierendes Werkzeug mit einer oder mehreren Schneiden ein Werkstück bearbeitet, wobei die Schneiden periodisch in das Werkstück eingreifen. Solche Werkzeugmaschinen sind hier als Fräsmaschinen bezeichnet.

## Patentansprüche

1. Verfahren zum Steuern einer Fräsmaschine, mit dem anhand eines zeitlich variablen Parameters (Iqnom) einer Numerischen Steuerung (NC) eine Fräsbearbeitung überwacht wird, indem der Parameter (Iqnom) auf das Über- oder Unterschreiten eines Grenzwertes während der Fräsbearbeitung überwacht wird, wobei im zeitlichen Verlauf des Parameters (Iqnom) die Zahneingriffsfrequenz (FZ) eines Fräswerkzeugs herausgefiltert wird, wobei der in einem festen Takt (Tf) gemessene Parameter (Iqnom) von einem Abtastratenwandler (1) verarbeitet wird, der den Parameter (Iqnom) mit einem variablen Takt (Tv) zur Weiterverarbeitung abgibt, wobei der variable Takt (Tv) einem Vielfachen, bevorzugt dem Fünffachen bis Zwanzigfachen, insbesondere dem Zehnfachen der Zahneingriffsfrequenz (FZ) des Fräswerkzeugs entspricht, wobei die Zahneingriffsfrequenz (FZ) das Produkt aus einer Drehzahl (DF) des Fräswerkzeugs und einer Anzahl (n) von Schneiden des Fräswerkzeugs ist, wobei aus dem mit variablem Takt (Tv) abgegebenen Parameter (Iqnom) die Zahneingriffsfrequenz (FZ) herausgefiltert wird, indem ein gleitender Mittelwertfilter (3) über eine dem Vielfachen der Zahneingriffsfrequenz (FZ) entsprechenden Anzahl von Werten mittelt.

2. Verfahren nach Anspruch 1, **dadurch gekennzeichnet, dass** der Parameter (Iqnom) im gleitenden Mittelwertfilter (3) zunächst in einer Integrationsstufe (3.1) aufintegriert und dann in einer Differentiationsstufe (3.2) differenziert wird.

3. Verfahren nach Anspruch 2, **dadurch gekennzeichnet, dass** die Differentiationsstufe (3.2) ein Schieberegister mit einer dem Vielfachen der Zahneingriffsfrequenz (FZ) entsprechenden Anzahl an Registerplätzen (3.3) aufweist, insbesondere zehn Registerplätze (3.3), durch die aufeinanderfolgende Parameterwerte mit einer zeitlichen Verzögerung geschoben werden.

4. Verfahren nach einem der Ansprüche 1 bis 3, **dadurch gekennzeichnet, dass** der Parameter (Iqnom) am Eingang des Mittelwertfilters (3) von einer Float-Zahl in eine Integer-Zahl umgewandelt wird, und am Ausgang des Mittelwertfilters (3) von einer Inter-Zahl in eine Float-Zahl.

5. Verfahren nach einem der Ansprüche 1 bis 4, **dadurch gekennzeichnet, dass** der am Ausgang des Mittelwertfilters (3) ausgegebene Parameter (Iqnom) herangezogen wird, um durch Vergleich mit einem Grenzwert eine Warnung oder einen Abbruch der Fräsbearbeitung auszulösen.

6. Numerische Steuerung zum Steuern einer Fräsbearbeitung an einer Werkzeugmaschine, mit einer Überwachungseinheit (4) zum Überwachen eines zeitlich variablen Parameters (Iqnom) der Numerischen Steuerung (NC) mittels eines Grenzwertes, wobei die Numerische Steuerung (NC) eingerichtet ist, um ein Verfahren nach einem der vorhergehenden Ansprüche auszuführen.

## Claims

1. Method for controlling a milling machine, by means of which a time-variable parameter (Iqnom) of a numerical controller (NC) is used to monitor a milling operation by virtue of the parameter (Iqnom) being monitored for a rise above or drop below a limit value during the milling operation, wherein the tooth engagement frequency (FZ) of a milling tool is filtered out in the time characteristic of the parameter (Iqnom), wherein the parameter (Iqnom) measured at a fixed rate (Tf) is processed by a sampling rate converter (1) that delivers the parameter (Iqnom) at a variable rate (Tv) for further processing, wherein the variable rate (Tv) corresponds to a multiple of, preferably five times to twenty times, in particular ten times, the tooth engagement frequency (FZ) of the milling tool, wherein the tooth engagement frequency (FZ) is the product of a speed (DF) of the milling tool and a number (n) of cuts by the milling tool, wherein the tooth engagement frequency (FZ) is filtered out from the parameter (Iqnom) delivered at a variable rate (Tv) by virtue of a sliding mean-value filter (3) averaging over a number of values that corresponds to the multiple of the tooth engagement frequency (FZ) .

2. Method according to Claim 1, **characterized in that** the parameter (Iqnom) is initially integrated in an integration stage (3.1) and then differentiated in a differentiation stage (3.2) in the sliding mean-value filter (3).

3. Method according to Claim 2, **characterized in that** the differentiation stage (3.2) has a shift register having a number of register locations (3.3) that corresponds to the multiple of the tooth engagement frequency (FZ), in particular ten register locations (3.3), which shift successive parameter values with a time delay.

4. Method according to one of Claims 1 to 3, **characterized in that** the parameter (Iqnom) is converted from a floating-point number to an integer number at the input of the mean-value filter (3), and from an integer number to a floating-point number at the output of the mean-value filter (3).

5. Method according to one of Claims 1 to 4, **characterized in that** the parameter (Iqnom) output at the output of the mean-value filter (3) is used to trigger a warning or termination of the milling operation by means of comparison with a limit value.

6. Numerical controller for controlling a milling operation on a machine tool, having a monitoring unit (4) for monitoring a time-variable parameter (Iqnom) of the numerical controller (NC) by means of a limit value, wherein the numerical controller (NC) is configured to carry out a method according to one of the preceding claims.

## Revendications

1. Procédé de commande d'une fraiseuse, selon lequel une opération de fraisage est surveillée sur la base d'un paramètre variable dans le temps (Iqnom) d'une commande numérique (NC) en surveillant le paramètre (Iqnom) pour déterminer s'il est supérieur ou inférieur à une valeur limite pendant l'opération de fraisage, dans lequel la fréquence d'engagement des dents (FZ) d'un outil de fraisage est filtrée au cours de l'évolution temporelle du paramètre (Iqnom), dans lequel le paramètre (Iqnom) mesuré selon une horloge fixe (Tf) est traité par un convertisseur de fréquence d'échantillonnage (1) qui délivre le paramètre (Iqnom) avec une horloge variable (Tv) pour traitement ultérieur, dans lequel l'horloge variable (Tv) correspond à un multiple, de préférence de cinq à vingt fois, en particulier de dix fois, la fréquence d'engagement des dents (FZ) de l'outil de fraisage, dans lequel la fréquence d'engagement des dents (FZ) est le produit d'une vitesse de rotation (DF) de l'outil de fraisage et d'un nombre (n) de tranchants de l'outil de fraisage, dans lequel la fréquence d'engagement des dents (FZ) est éliminée par filtrage à partir du paramètre (Iqnom) avec une horloge variable (Tv) par un filtre de calcul de moyenne glissante (3) calculant une moyenne sur un nombre de valeurs correspondant à un multiple de la fréquence d'engagement des dents (FZ).

2. Procédé selon la revendication 1, **caractérisé en ce que** le paramètre (Iqnom) utilisé dans le filtre de valeur de moyenne glissante (3) est d'abord intégré lors d'une étape d'intégration (3.1) puis est différencié lors d'une étape de différenciation (3.2).

3. Procédé selon la revendication 2, **caractérisé en ce que** l'étage de différenciation (3.2) comporte un registre à décalage présentant un nombre de positions de registre (3.3) qui correspond à un multiple de la fréquence d'engagement des dents (FZ), en particulier **en ce que** dix positions de registre (3.3) sont décalées selon les valeurs de paramètres successives avec un retard temporel.

4. Procédé selon l'une des revendications 1 à 3, **caractérisé en ce que** le paramètre (Iqnom) à l'entrée du filtre de valeur moyenne (3) est converti d'un nombre flottant en un nombre entier et **en ce qu'**à la sortie du filtre de valeur moyenne (3) il est converti d'un inter-nombre en un nombre flottant.

5. Procédé selon l'une des revendications 1 à 4, **caractérisé en ce que** le paramètre (Iqnom) délivré à la sortie du filtre de valeur moyenne (3) est utilisé pour déclencher un avertissement ou un arrêt de l'opération de fraisage par comparaison à une valeur limite.

6. Commande numérique destinée à commander une opération de fraisage sur une machine-outil, comprenant une unité de surveillance (4) destinée à surveiller un paramètre variable dans le temps (Iqnom) de la commande numérique (NC) au moyen d'une valeur limite, dans laquelle la commande numérique (NC) est conçue pour mettre en oeuvre un procédé selon l'une des revendications précédentes.
